# EUROPÄISCHE PATENTANMELDUNG

(11) **EP 1 045 012 A1**
(43) Veröffentlichungstag der Anmeldung: **18.10.2000**
(21) Anmeldenummer: 99116863.4
(22) Anmeldetag: 03.09.1999
(51) Int. Cl.: C09D 5/16, C09D 5/14, C09D 107/00, C09D 115/02

(54) **Unterwasseranstrichmittel für Schiffe**

(30) Priorität: 12.03.1999 DE 19911134; 23.07.1999 DE 19934677
(71) Anmelder: Becker, Josef, 83734 Hausham (DE)
(72) Erfinder: Becker, Josef, 83734 Hausham (DE)
(74) Vertreter: Jung, Elisabeth, Dr.

(57) **Zusammenfassung**

Das erfindungsgemäße Unterwasseranstrichmittel für Schiffe besteht außer aus einer Mischung von Lösungen A und B, wobei es sich bei der Lösung A um eine Kombination aus einem Siliconöl, einem Alkohol und einem Fichtennadel-/Kiefernnadenöl und/oder Terpentinöl handelt, während die Lösung B Kolophonium in einem Fichtennadel-/Kiefernnadelöl und/oder Terpentinöl enthält, noch aus einer Lösung von Naturkautschuk oder einem Chlorkautschuk. Diese Kautschuklösung macht zweckmäßig 10 bis 30 Volumprozent der Gesamtmischung aus.

## Beschreibung

Die vorliegende Erfindung betrifft ein umweltfreundliches Anstrichmittel für Schiffs- oder Bootsrümpfe, das sich einfach aufbringen läßt und stark schmutzabweisend ist.

Es handelt sich dabei um eine Mischung aus 25 bis 30 Volumprozent einer Lösung A und 75 bis 70 Volumprozent einer Lösung B, wobei die Lösung A
a) zu 26 bis 39 Volumprozent aus einem Siliconöl,
b) zu 26 bis 49 Volumprozent aus mindestens einem niedrigmolekularen Alkohol und
c) zu 26 bis 49 Volumprozent aus einem Fichtennadel- oder Kiefernnadelöl und/oder einem Terpentinöl
besteht, während die Lösung B zu gleichen Gewichtsteilen aus
d) Kolophonium und
e) einem Fichtennadel- oder Kiefernnadelöl und/oder einem Terpentinöl besteht.

Diese neuartige Kombination von Bestandteilen gewährleistet eine ausgezeichnete Haftung am Schiffsrumpf und eine hohe Schmutzabweisung, außerdem verbessert die Siliconölkomponente die Gleitfähigkeit des Schiffes.

Die Mischung aus den beiden Lösungen A und B läßt sich auf den Schiffsrumpf aufsprühen oder mit dem Pinsel auftragen.

Es ist zweckmäßig, der Mischung auch noch einen kleinen Anteil eines Antiverlaufsmittels zuzusetzen, insbesondere wenn das Anstrichmittel durch Aufsprühen aufgebracht wird.

Die Mischung wird in mehreren Schritten wie folgt hergestellt:

Für die Lösung A stellt man
a) eine Lösung aus dem Siliconöl und dem niedrigmolekularen Alkohol her.

Zu dieser klaren Lösung setzt man
b) ein Fichtennadel- oder Kiefernnadelöl und/oder ein Terpentinöl hinzu.

Für die Herstellung der Lösung B löst man
c) das Kolophonium in einem Fichtennadel- oder Kiefernnadelöl und/oder einem Terpentinöl auf.

In einem letzten Schritt
d) vermischt man die beiden Lösungen A und B im gewünschten Volumverhältnis.

Gemäß einer bevorzugten Ausführungsform sind die Komponenten a), b) und c) in der Lösung A in gleichen Volumanteilen vorhanden.

Das Volumverhältnis der Lösungen A und B in der fertigen Mischung beträgt zweckmäßig 30:70.

Als Siliconöl kann jedes handelsübliche Produkt verwendet werden, zweckmäßig handelt es sich dabei um ein linearpolymeres Dimethylsiloxan. Solche Öle haben im allgemeinen Molekulargewichte im Bereich von 1000 bis 150 000.

Als niedrigmolekularer Alkohol eignet sich beispielsweise Ethanol, n-Propanol und insbesondere Isopropanol. Es können auch Alkoholgemische eingesetzt werden.

Bei den erfindungsgemäß verwendeten Fichtennadel- und Kiefernnadelölen handelt es sich um Naturprodukte, die aus den verschiedenen Pinaceen-Arten gewonnen werden. Von besonders hoher Qualität ist sibirisches Fichtennadelöl.

Als Terpentinöle kommen Produkte in Betracht, die aus dem Balsam lebender Kiefernbäume oder aus dem Holz bzw. den Wurzeln solcher Bäume gewonnen werden. Auch sogenanntes Sulfatterpentinöl kann verwendet werden.

Als Kolophonium kommen alle im Handel erhältlichen Typen in Betracht, nämlich Balsamharz, Wurzelharz und sogenanntes Tallharz.

Gemäß einer weiteren Ausbildung lassen sich die Eigenschaften dieses Anstrichmittels noch verbessern, insbesondere in Abhängigkeit vom Salzgehalt und der Temperatur des den Schiffsrumpf umgebenden Wassers, wenn das Anstrichmittel noch 10 bis 30 Volumprozent einer Lösung von Naturkautschuk oder einen Chlorkautschuk enthält.

Besonders zweckmäßig enthält die Gesamtmischung 20 Volumprozent einer solchen Kautschuklösung.

Der Chlorkautschuk kann sich von Naturkautschuk oder einem Synthesekautschuk ableiten, z.B. von Polybutadien, Polyethylen, Polyisopren oder Polypropylen. Er weist zweckmäßig eine Molmasse im Bereich von 50 000 bis 200 000 g/mol auf.

Der betreffende Chlorkautschuk hat im allgemeinen einen Chlorgehalt von 60 bis 70%, insbesondere von 64 bis 68%.

Chlorkautschuke lösen sich gut in aromatischen und in chlorierten aliphatischen Kohlenwasserstoffen sowie in Estern. Sehr zweckmäßig enthält daher die zu verwendende Chlorkautschuklösung die Verbindungen Xylol und Butylacetat und/oder Ethylacetat als Lösungsmittel.

Der Gehalt der Lösung an Kautschuk oder Chlorkautschuk beträgt im allgemeinen 8 bis 15 Gewichtsprozent, vorzugsweise 10 bis 12 Gewichtsprozent.

Geeignete Chlorkautschuklösungen sind im Handel erhältlich. Die Zumischung der Kautschuklösung erfolgt nach der Herstellung der Mischung aus den Bestandteilen A und B, wie vorstehend beschrieben.

### Ausführungsbeispiel

Man stellt eine Lösung A aus gleichen Volumenanteilen von
a) Polydimethylsiloxan-Öl
b) Isopropanol und
c) sibirischem Fichtennadelöl
her, indem man 333,3 ml der Komponente a) in 333,3 ml der Komponente b) auflöst und dann 333,3 ml der Komponente c) zusetzt. Außerdem stellt man eine Lösung B aus Kolophonium und einem Holzterpentinöl her, welche gleiche Gewichtsanteile an Kolophonium und Öl enthält.

Anschließend vermischt man 900 ml der Lösung A mit 2100 ml der Lösung B, was einem Volumenverhältnis von 30:70 entspricht.

Zu dieser Mischung setzt man dann eine solche Volumenmenge der nachstehend beschriebenen Kautschuklösung hinzu, daß die Gesamtmischung 20 Vol.% dieser Lösung enthält.

| | |
|---|---|
| Titandioxid | 15,5 Gew.% |
| Ethylbenzol | 2,5 Gew.% |
| Xylol | 10,0 Gew.% |
| Cu-phthalocyanin | 0,4 Gew.% |
| Siliziumdioxid | 0,3 Gew.% |
| Calciumcarbonat | 2,3 Gew.% |
| Bariumsulfat | 5,8 Gew.% |
| Chlorparaffin | 5,0 Gew.% |
| Chlorkautschuk | 11,5 Gew.% |
| Ethylacetat | 17,3 Gew.% |
| Bis-(2-phenoxyethyl)-formal | 3,4 Gew.% |
| Butylacetat | 26,0 Gew.% |

Die Menge an zugesetzter Kautschuklösung wird zweckmäßig in Anpassung an die Wassertemperatur bzw. den Salzgehalt des Wassers variiert, z.B. in Abhängigkeit davon, ob sich das Schiff in der Nordsee, im Bodensee oder im Mittelmeer befindet.

Diese Mischung wird nach Zusatz eines Antiverlaufsmittels auf den mit einem Dampfstrahler gereinigten und gut getrockneten Unterwasserschiffsrumpf eines Segelbootes aufgesprüht. Die Sprühbehandlung wird dreimal wiederholt, wobei man den Anstrichfilm nach jedem Auftragen gut trocknen läßt.

## Patentansprüche

1. Unterwasseranstrichmittel für Schiffe, dadurch gekennzeichnet, daß es außer einer Mischung aus 25 bis 30 Volumprozent einer Lösung A und
75 bis 70 Volumprozent einer Lösung B, wobei die Lösung A
a) zu 26 bis 39 Volumprozent aus einem Silikonöl,
b) zu 26 bis 49 Volumprozent aus minestens einem niedrigmolekularen Alkohol und zu
c) 26 bis 49 Volumprozent aus einem Fichtennadel- oder Kiefernnadelöl und/oder einem Terpentinöl besteht und die Lösung B zu gleichen Gewichtsteilen aus
d) Kolophonium und
e) einem Fichtennadel- oder Kiefernnadelöl und/oder einem Terpentinöl besteht,
noch 10 bis 30 Volumprozent, bezogen auf die Gesamtmischung, einer Lösung von Naturkautschuk oder einem Chlorkautschuk enthält.

2. Unterwasseranstrichmittel nach Anspruch 1, dadurch gekennzeichnet, daß die Lösung A zu gleichen Teilen aus den Komponenten a) Siliconöl, b) niedrigmolekularer Alkohol und c) Fichtennadelöl oder Kiefernnadelöl und/oder Terpentinöl besteht.

3. Unterwasseranstrichmittel nach Anspruch 1 und 2, dadurch gekennzeichnet, daß das Siliconöl ein linearpolymeres Dimethylsiloxan umfaßt.

4. Unterwasseranstrichmittel nach Anspruch 1 bis 3, dadurch gekennzeichnet, daß der niedrigmolekulare Alkohol Ethanol, n-Propanol und/oder Isopropylalkohol ist.

5. Unterwasseranstrichmittel nach Anspruch 1 bis 4, dadurch gekennzeichnet, daß die Mischung aus A und B aus 30 Volumprozent der Lösung A und 70 Volumprozent der Lösung B besteht und daß die Lösung A
33,3 Volumprozent Polydimethylsiloxan-Öl,
33,3 Volumprozent Isopropanol und
33,3 Volumprozent Terpentinöl
enthält.

6. Unterwasseranstrichmittel nach Anspruch 1 bis 5, dadurch gekennzeichnet, daß die Mischung ein Antiverlaufsmittel enthält.

7. Unterwasseranstrichmittel nach Anspruch 1 bis 6, dadurch gekennzeichnet, daß es 20 Volumprozent, bezogen auf die vorstehend genannte Mischung, der Kautschuklösung enthält.

8. Unterwasseranstrichmittel nach Anspruch 1 bis 7, dadurch gekennzeichnet, daß die Kautschuklösung Xylol und Butylacetat und/oder Ethylacetat als Lösungsmittel enthält.

9. Unterwasseranstrichmittel nach Anspruch 1 bis 8, dadurch gekennzeichnet, daß die Kautschuklösung den Naturkautschuk oder den Chlorkautschuk in einer Menge von 8 bis 15 Gewichtsprozent, vorzugsweise von 10 bis 12 Gewichtsprozent, enthält.

10. Unterwasseranstrichmittel nach Anpruch 1 bis 9, dadurch gekennzeichnet, daß der betreffende Chlorkautschuk eine Molmasse von 50 000 bis 200 000 g/mol aufweist.

11. Unterwasseranstrichmittel nach Anspruch 1 bis 10, dadurch gekennzeichnet, daß der betreffende Chlorkautschuk einen Chlorgehalt von 60 bis 70%, vorzugsweise von 64 bis 68%, aufweist.

12. Unterwasseranstrichmittel nach Anspruch 1 bis 11, dadurch gekennzeichnet, daß sich der betreffende Chlorkautschuk von Polybutadien, Polyethylen, Polyisopren oder Polypropylen ableitet.

13. Verfahren zur Herstellung eines Unterwasseranstrichmittels nach Anspruch 1 bis 12, dadurch gekennzeichnet, daß man für die Lösung A
a) eine Lösung aus dem Siloconöl und dem niedrigmolekularen Alkohol herstellt und
b) zu dieser Lösung ein Fichtennadel- oder Kiefernnadelöl und/oder ein Terpentinöl hinzusetzt;
daß man für die Lösung B
c) das Kolophonium in einem Fichtennadel- oder Kiefernnadelöl und/oder einem Terpentinöl auflöst,
d) die beiden Lösungen A und B miteinander vermischt und
e) zu dieser Mischung die Lösung von Naturkautschuk oder einem Chlorkautschuk hinzusetzt.
